# EUROPEAN PATENT APPLICATION

(11) **EP 2 698 614 A2**
(43) Date of publication of application: **19.02.2014**
(21) Application number: 13171733.2
(22) Date of filing: 12.06.2013
(51) Int. Cl.: G01K 1/10, G01K 7/22, G01K 13/02

(54) **Sensor Assemby with Protective Coating and Method of Applying Same**

(30) Priority: 13.06.2012 US 201213495716
(71) Applicant: General Electric Company, Schenectady, New York 12345 (US)
(72) Inventor: Seaton, John David, Taunton, Somerset TA2 8QY (GB)
(74) Representative: Herzog, Martin

(57) **Abstract**

A sensor assembly 100 with a protective coating 108 and a method of applying the coating is disclosed. The sensor assembly 100 includes a sensor 102, a first conductive lead 104 extending from the sensor, a second conductive lead 106 extending from the sensor, and a protective coating 108 encapsulating the sensor 102 and portions of the first conductive lead and the second conductive lead proximate to the sensor, wherein the protective coating comprises a fluoroelastomeric polymer. The coating is applied by immersing the sensor assembly into a cooled fluoroelastomeric polymer and then withdrawing the sensor assembly.

## Description

### BACKGROUND OF THE INVENTION

The subject matter disclosed herein relates to sensor assemblies with protective coatings for use in high temperature and highly corrosive environments.

As environmental regulations become increasingly stringent, new technology is being utilized to permit compliance by combustion engines. For example, within the automotive industry, Exhaust Gas Recycling (EGR) systems have been developed that recycle at least a portion of the exhaust gases back into the engine's combustion chamber. While EGR systems reduce emission of certain pollutants, including NOₓ, when the exhaust gases are recycled within the engine, the engine components are exposed to higher concentrations of these gases for long periods of time. This results in elevated acid levels within the EGR system, including nitric and sulfuric acid. The high temperature and highly corrosive environment can negatively affect the functioning of engine components and sensors, including thermistors, that are disposed in the EGR system.

While conventional thermistors are typically protected by a coating of an epoxy, silicone, or other polymeric resin, the highly corrosive environments of EGR systems impose special requirements which these conventional resins used to coat sensors do not satisfy. It would be desirable to provide a coated sensor that was able to function within highly corrosive environments despite the elevated levels of corrosive compounds necessitated by new environmental regulations.

The discussion above is merely provided for general background information and is not intended to be used as an aid in determining the scope of the claimed subject matter.

### BRIEF DESCRIPTION OF THE INVENTION

A sensor assembly with a protective coating and a method of applying the coating is disclosed. The sensor assembly includes a sensor, a first conductive lead extending from the sensor, a second conductive lead extending from the sensor, and a protective coating encapsulating the sensor and portions of the first conductive lead and the second conductive lead proximate to the sensor, wherein the protective coating comprises a fluoroelastomeric polymer. The coating is applied by immersing the sensor assembly into a cooled fluoroelastomeric polymer and then withdrawing the sensor assembly. An advantage that may be realized by the practice of some of the disclosed embodiments is that the fluoroelastomeric polymer protects the sensor without being electrically conductive.

In one exemplary embodiment, a device is disclosed, the device comprising a sensor assembly comprising a sensor, first and second conductive leads, and a protective coating encapsulating the sensor and portions of the first and second conductive leads. The protective coating comprises a fluoroelastomeric polymer that is free of carbon black.

In another exemplary embodiment, a method of coating a sensor assembly is disclosed, the method comprising the steps of dissolving a fluoroelastomeric polymer in an organic carrier solvent, adjusting the viscosity of the organic carrier solvent, cooling the dissolved fluoroelastomeric polymer, immersing a sensor assembly into the cooled fluoroelastomeric polymer, withdrawing the sensor assembly, permitting at least some of the organic carrier solvent to evaporate and curing the conformal layer to produce a coated sensor assembly.

In another exemplary embodiment, a system is disclosed, the system comprising an exhaust gas recycling system comprising, an engine with at least one cylinder chamber, an air intake manifold and an exhaust manifold, both connected to the cylinder chamber, an exhaust gas recycling line connected to the exhaust manifold and the cylinder chamber for recycling a portion of exhaust gases, a cooler for cooling exhaust gases as they pass through the exhaust gas recycling line, a coated thermistor assembly for sensing the temperature of a first location along the exhaust gas recycling line, the first coated thermistor assembly comprising a thermistor, a first conductive lead extending from the thermistor, a second conductive lead extending from the thermistor; and a protective coating encapsulating the thermistor and portions of the first conductive lead and the second conductive lead proximate to the thermistor, wherein the protective coating comprises a fluoroelastomeric polymer that is free of carbon black.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIG. 1 depicts an exemplary coated sensor assembly;
FIG. 2 is a flow diagram depicting one exemplary method for coating a sensor assembly; and
FIG. 3 is a schematic depiction of an exhaust gas recycling (EGR) system utilizing a coated thermistor.

### DETAILED DESCRIPTION OF THE INVENTION

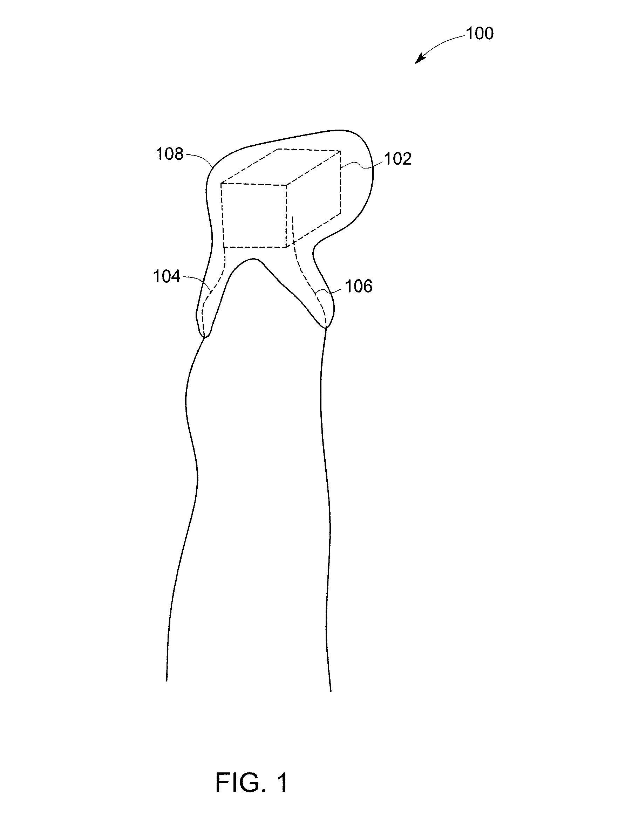

FIG. 1 depicts an exemplary sensor assembly 100 that comprises a sensor 102. In one embodiment, the sensor 102 is a negative temperature coefficient (NTC) ceramic thermistor. It will be understood that, in addition to thermistors, other types of sensors can form part of the sensor assembly 100. A first conductive lead 104 and a second conductive lead 106 extend from the sensor 102. A protective coating 108 encapsulates the sensor 102 and the portions of the first conductive lead 104 and the second conductive lead 106 proximate to the sensor 102.

In the exemplary embodiment of FIG. 1, the protective coating 108 is made of a fluoroelastomeric polymer. Fluoroelastomeric polymers (FKM) are a class of polymers that exhibit resistance to corrosion. Fluoroelastomeric polymers are typically used to form o-rings, gaskets, and seals for automotive, aerospace and/or industrial applications of machines by injection molding. Since many of these fluoroelastomeric polymers include electrically conductive additives to facilitate the molding process, conventional fluoroelastomeric polymers are undesirable for use with electrical devices, including thermistors.

The fluoroelastomeric polymer used for the protective coating 108 is selected to provide an acceptable level of chemical durability to resist the acidic environment of a EGR system, including resistance to nitric acid, sulphuric acid and biodiesel combustion products at elevated temperatures without including electrically conductive additives. The fluoroelastomeric polymer is designed to function as an electrically insulating coating with dielectric strengths of about 50kV per millimeter or greater. In some embodiments, the resistance value is greater than 100 Mega ohms at 500 volts. The fluoroelastomeric polymer should also have sufficient hardness to safeguard the sensor assembly 100 against physical damage, for example, a Shore A hardness of sixty or greater. Sufficient flexibility to permit first and second conductive leads 104, 106 to bend is also desirable. The fluoroelastomeric polymer is also selected to exhibit acceptable water immersion resistance (e.g., minimal change of resistance of the thermistor after 1000 hours of water immersion at 85°C under 5V of power with a 6.81 kilo ohm series resistor) and mechanical properties (e.g., able to endure over 3000 cycles of thermal shock between -40°C and 155°C). The fluoroelastomeric polymer should also be capable of surviving curing temperature of about 200°C without negatively impacting performance. One or more of these properties are present in the harsh environment of the EGR system, which includes high concentrations of acids at high temperatures (about 250°C for high melting point lead solder or 200°C for lead-free solder). To permit proper coating of the sensor assembly 100, the fluoroelastomeric polymer is capable of being applied by dip coating.

The fluoroelastomeric polymer is the polymerization product of a reaction mixture that includes a fluorinated or perfluorinated monomer with one or more co-monomers. Examples of suitable monomers include vinylidene fluoride and tetrafluoroethylene. Examples of suitable co-monomers include fluorinated propylenes, such as hexafluoropropylene. Further examples of suitable monomers include tetrafluoroethylene and perfluoromethylvinylether. The resulting fluoroelastomeric polymer is typically 60% fluorine or more by weight and is saturated. One suitable fluoroelastomeric polymer is sold by Du Pont under the trade name VITON®. Care must be taken to select a fluoroelastomeric polymer formulation where conductive processing aids, such as carbon black, are omitted (e.g. Non-Black VITON®).

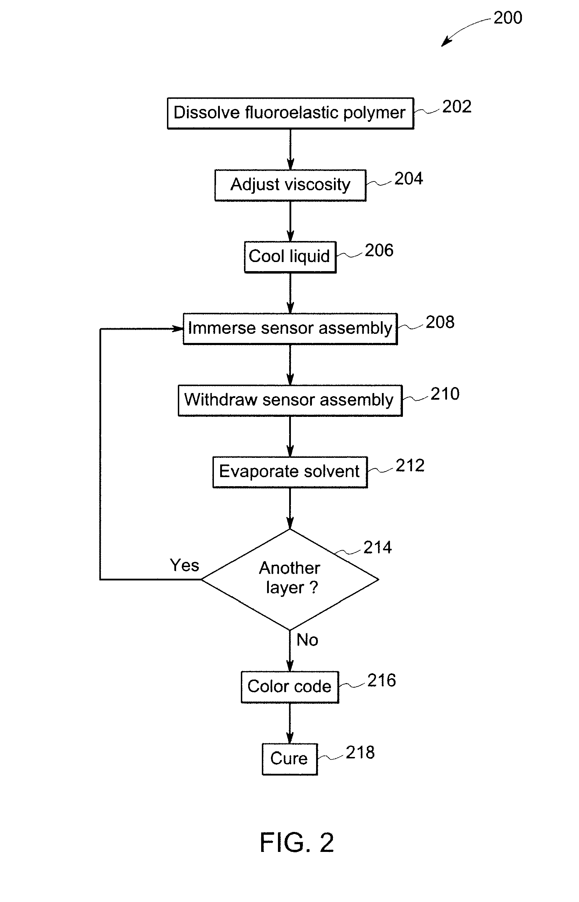

FIG. 2 is a flow diagram depicting one exemplary method 200 for coating a sensor assembly 100 with a protective coating 108 (FIG. 1). In step 202, a fluoroelastic polymer is dissolved in an organic carrier solvent. In one embodiment, an organic carrier solvent with high volatility is selected to permit rapid evaporation after coating. Examples of suitable organic carrier solvents include low molecular weight ketones, such as methylethylketone, acetone, etc. Other suitable organic carrier solvents would be apparent to those skilled in the art after benefitting from reading this specification. A sufficient quantity of the organic carrier solvent is used to provide a, for example, 30% to 50% liquid by weight, based on the desired viscosity. In one embodiment, the fluoroelastic polymer formulation includes solids. Generally, the solids are selected to be chemically inert. Examples of suitable solids include metal oxides such as titanium dioxide and silicon dioxide.

In step 204, the viscosity of the dissolved fluoroelastic polymer is adjusted. In one embodiment, the viscosity is adjusted by adding a sufficient amount of the organic carrier solvent to achieve a desired viscosity. The viscosity is adjusted to, for example, a value of between 1000 centipoise and 5000 centipoise. In some embodiments, the viscosity is adjusted by permitting a portion of the organic carrier solvent to evaporate.

In step 206, the liquid is cooled to a temperature below ambient temperature to reduce the rate of evaporation of the organic carrier solvent. The liquid may be cooled to a temperature that is about 10°C cooler than the ambient temperature. In one exemplary embodiment, the ambient temperature is about 25°C and the liquid may be cooled to a temperature of about 15°C.

In step 208, the entire sensor of the sensor assembly is immersed in the cooled fluoroelastomeric polymer after the fluoroelastomeric polymer has dissolved. The sensor assembly is immersed such that a portion of the conductive leads of the sensor assembly, which are proximate to the sensor, are also immersed. This helps protect the connection between the sensor and the conductive leads.

In step 210, the sensor assembly is withdrawn from the cooled fluoroelastomeric polymer. The rate with which step 210 is performed controls the thickness of the resulting layer. When a thick layer is desired, the sensor assembly is withdrawn relatively rapidly. The cooled organic carrier solvent contacts the comparatively warm ambient environment and rapidly evaporates to deposit a relatively thick layer of the fluoroelastomeric polymer. When a thin layer is desired, the sensor assembly is withdrawn relatively slowly. The cooled organic carrier solvent is given time to flow off of the sensor assembly before it contacts the comparatively warm ambient environment. This deposits a relatively thin layer of the fluoroelastomeric polymer. By adjusting the rapidity with which the sensor assembly is withdrawn, a layer with a predetermined thickness is produced. In some embodiments, multiple layers are deposited, one atop another, and provide a conformal layer of a predetermined thickness.

In step 212, at least a portion of the organic carrier solvent is permitted to evaporate to form a semisolid conformal layer of the newly deposited fluoroelastomeric polymer. In one embodiment, step 212 further comprises an ambient drying step that lasts for at least two minutes. For example, the newly deposited fluoroelastomeric polymer may be exposed to the ambient environment for about two minutes to permit the organic carrier solvent to evaporate. Since the ambient environment is warm relative to the temperature of the organic carrier solvent, evaporation is facilitated.

In step 214, a determination is made concerning whether or not an additional layer of fluoroelastomeric polymer should be deposited. If another layer is desired, the method 200 returns to step 208 and the sensor assembly is immersed in the cooled fluoroelastomeric polymer again. This deposits an additional layer of fluoroelastomeric polymer atop the previously deposited layer(s). If another layer is not desired, step 216 may be executed wherein a portion of the coated sensor assembly (e.g. the tip) is dipped in a colorant to provide a coating of a predetermined color for color coding. A variety of compatible colorants are known in the art. In one embodiment, two layers of fluoroelastomeric polymer are provided. In another embodiment, three layers of fluoroelastomeric polymer are provided. Advantageously, since the conformal layer(s) are applied using a dip coating technique, the thickness of the resulting coating is easily controlled. The coating length (i.e. immersion depth) of 30 mm or greater can be achieved using this technique.

In step 218, the layer(s) of fluoroelastomeric polymer are cured to encapsulate the sensor. In one embodiment, the curing step includes heating the coated sensor assembly to a predetermined temperature for a predetermined time that is selected to remove the organic carrier solvent and cross-link (vulcanize) the fluoroelastic polymer. For example, the coated sensor assembly may be heated to a temperature of about 100°C for about thirty minutes. The coated sensor assembly may also be subjected to a stepwise heating process that both drives off any residual organic carrier solvent as well as cures the layers of fluoroelastomeric polymer to seal the sensor within the fluoroelastomeric polymer. An exemplary stepwise heating process heats the cured, coated sensor assembly to a temperature of about 90°C for a predetermined period of time. Thereafter, the temperature is increased to about 160°C for a predetermined period of time. Two additional stepwise heating processes are likewise performed at temperatures of 180°C and 200°C.

Thermistors coated in accordance with the teachings of this specification show less than a 3% shift in resistance after operating at 85°C for 2000 hours immersed in water. The thermistors likewise showed less than a 0.4% shift in resistance after aging at temperatures of up to 170°C for 1000 hours. In comparison, conventional thermistors showed a significantly larger shift in resistance when subjected to the same conditions.

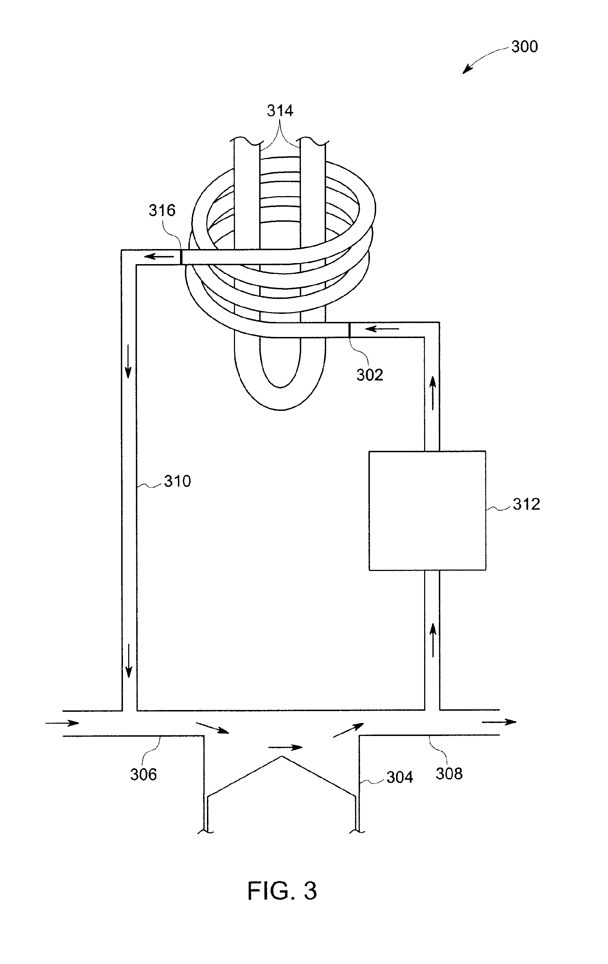

FIG. 3 is a schematic depiction of an EGR system 300 utilizing a coated thermistor assembly 302. EGR system 300 comprises a cylinder chamber 304, which is connected to an air intake manifold 306. An exhaust manifold 308 is also connected to the cylinder chamber 304. The exhaust manifold 308 includes an exhaust gas recycling line 310 which returns exhaust gases to the cylinder chamber 304. In the exemplary embodiment of FIG. 3, the exhaust gas recycling line 310 returns a portion of the exhaust gases to the cylinder chamber 304 by re-introducing the exhaust gases into the air intake manifold 306. The volume of exhaust gases that are recycled is regulated by EGR valve 312.

The EGR system 300 of FIG. 3 includes a cooler 314 which is operatively connected to the exhaust gas recycling line 310. Examples of suitable coolers include circulating oil coolers, water coolers and the like. Cooler 314 may be in physical contact with the exhaust gas recycling line 310 or be proximate exhaust gas recycling line 310 provided that heat can be exchanged. To ensure cooler 314 is functioning properly, the first coated thermistor assembly 302 is positioned at a first location along the exhaust gas recycling line 310. In the exemplary embodiment of FIG. 3, the first coated thermistor assembly 302 is disposed before the cooler 314 to monitor the temperature of the exhaust gases before they are cooled. In another embodiment, the first coated thermistor assembly 302 is disposed at a second location after the cooler 314 to monitor the temperature of the exhaust gases after they are cooled. In the exemplary embodiment of FIG. 3, both the first coated thermistor assembly 302 and a second coated thermistor assembly 316 are provided to monitor the temperature of the exhaust gases both before and after cooler 314. In such an embodiment, the first and second coated thermistor assemblies 302, 316 are disposed on opposite sides of the cooler 314.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A sensor assembly comprising:
   a sensor;
   a first conductive lead extending from the sensor;
   a second conductive lead extending from the sensor; and
   a protective coating encapsulating the sensor and portions of the first conductive lead and the second conductive lead proximate to the sensor, wherein the protective coating comprises a fluoroelastomeric polymer that is free of carbon black.
2. The sensor assembly of claim 1, wherein the fluoroelastomeric polymer comprises the polymerization product of a reaction mixture comprising at least one co-monomer and tetrafluoroethylene and/or vinylidene fluoride.
3. The sensor assembly of clause 1 or clause 2, wherein the at least one co-monomer includes a propylene.
4. The sensor assembly of any preceding clause, wherein the propylene is hexafluoropropylene.
5. The sensor assembly of any preceding clause, wherein the fluoroelastomeric polymer is saturated.
6. The sensor assembly of any preceding clause, wherein the fluoroelastomeric polymer is at least 60% fluorine by weight.
7. The sensor assembly of any preceding clause, wherein the fluoroelastomeric polymer has a dielectric strength of about 50kV per millimeter or greater.
8. The sensor assembly of any preceding clause, wherein the sensor is a thermistor.
9. The sensor assembly of any preceding clause, wherein the thermistor is a negative temperature coefficient ceramic.
10. A method of coating a sensor assembly, the method comprising the steps of:
   dissolving a fluoroelastomeric polymer in an organic carrier solvent;
   adjusting the viscosity of the organic carrier solvent;
   cooling the dissolved fluoroelastomeric polymer to a temperature below ambient temperature;
   immersing a sensor assembly into the cooled fluoroelastomeric polymer, wherein the sensor assembly comprises a sensor and two conductive leads, and wherein the entire sensor and portions of the conducive leads proximate to the sensor are also immersed;
   withdrawing the sensor assembly from the fluoroelastomeric polymer;
   permitting at least some of the organic carrier solvent to evaporate after the step of withdrawing the sensor assembly, thereby producing a conformal layer of fluoroelastomeric polymer; and
   curing the conformal layer to produce a coated sensor assembly.
11. The method of any preceding clause, further comprising repeating the steps of immersing the sensor assembly, withdrawing the sensor assembly, and permitting at least some of the organic solvent to evaporate to form a plurality of conformal layers.
12. The method of any preceding clause, further comprising the step of color coding a portion of the coated sensor assembly.
13. The method of any preceding clause, wherein the step of permitting further comprises an ambient drying step that lasts for at least two minutes.
14. The method of any preceding clause, wherein the step of curing heats the coated sensor assembly to a temperature of at least about 100°C for about thirty minutes.
15. The method of any preceding clause, wherein the step of curing further comprises the step of heating the coated sensor assembly to a predetermined temperature for a predetermined time selected to remove the organic carrier solvent and cross-link the fluoroelastic polymer.
16. The method of any preceding clause, wherein the step of curing further comprises a stepwise heating process which removes residual organic carrier solvent.
17. An exhaust gas recycling system, the system comprising:
   an engine with at least one cylinder chamber;
   an air intake manifold and an exhaust manifold, both connected to the cylinder chamber;
   an exhaust gas recycling line connected to the exhaust manifold and the cylinder chamber for recycling a portion of exhaust gases into the cylinder chamber;
   a cooler operatively connected to the exhaust gas recycling line for cooling exhaust gases as the exhaust gases pass through the exhaust gas recycling line;
   a first coated thermistor assembly for sensing the temperature of a first location along the exhaust gas recycling line, the first coated thermistor assembly comprising:
      a thermistor;
      a first conductive lead extending from the thermistor;
      a second conductive lead extending from the thermistor; and
      a protective coating encapsulating the thermistor and portions of the first conductive lead and the second conductive lead proximate to the thermistor, wherein the protective coating comprises a fluoroelastomeric polymer that is free of carbon black.
18. The exhaust gas recycling system of any preceding clause, further comprising a second coated thermistor assembly for sensing the temperature of a second location along the exhaust gas recycling line.
19. The exhaust gas recycling system of any preceding clause, wherein the first and second coated thermistor assemblies are disposed on opposite sides of the cooler, the first coated thermistor assembly for sensing temperature before the cooler and the second coated thermistor assembly for sensing temperature after the cooler.

## Claims

1. A sensor assembly (100) comprising:
a sensor (102);
a first conductive lead (104) extending from the sensor;
a second conductive lead (106) extending from the sensor; and
a protective coating (108) encapsulating the sensor (102) and portions of the first conductive lead and the second conductive lead proximate to the sensor, wherein the protective coating (108) comprises a fluoroelastomeric polymer that is free of carbon black.

2. The sensor assembly of claim 1, wherein the fluoroelastomeric polymer comprises the polymerization product of a reaction mixture comprising at least one co-monomer and tetrafluoroethylene and/or vinylidene fluoride.

3. The sensor assembly of claim 1 or claim 2, wherein the at least one co-monomer includes a propylene.

4. The sensor assembly of any preceding claim, wherein the propylene is hexafluoropropylene.

5. The sensor assembly of any preceding claim, wherein the fluoroelastomeric polymer is saturated.

6. The sensor assembly of any preceding claim, wherein the fluoroelastomeric polymer is at least 60% fluorine by weight.

7. The sensor assembly of any preceding claim, wherein the fluoroelastomeric polymer has a dielectric strength of about 50kV per millimeter or greater.

8. The sensor assembly of any preceding claim, wherein the sensor is a thermistor.

9. The sensor assembly of any preceding claim, wherein the thermistor is a negative temperature coefficient ceramic.

10. An exhaust gas recycling system, the system comprising:
an engine with at least one cylinder chamber;
an air intake manifold and an exhaust manifold, both connected to the cylinder chamber;
an exhaust gas recycling line connected to the exhaust manifold and the cylinder chamber for recycling a portion of exhaust gases into the cylinder chamber;
a cooler operatively connected to the exhaust gas recycling line for cooling exhaust gases as the exhaust gases pass through the exhaust gas recycling line;
a sensor assembly according to any preceding claim, for sensing the temperature of a first location along the exhaust gas recycling line.

11. The exhaust gas recycling system of claim 10, wherein the sensor is a thermistor.

12. The exhaust gas recycling system of claim 11, further comprising a second coated thermistor assembly for sensing the temperature of a second location along the exhaust gas recycling line.

13. A method of coating a sensor assembly, the method comprising the steps of:
dissolving a fluoroelastomeric polymer in an organic carrier solvent;
adjusting the viscosity of the organic carrier solvent;
cooling the dissolved fluoroelastomeric polymer to a temperature below ambient temperature;
immersing a sensor assembly into the cooled fluoroelastomeric polymer, wherein the sensor assembly comprises a sensor and two conductive leads, and wherein the entire sensor and portions of the conducive leads proximate to the sensor are also immersed;
withdrawing the sensor assembly from the fluoroelastomeric polymer;
permitting at least some of the organic carrier solvent to evaporate after the step of withdrawing the sensor assembly, thereby producing a conformal layer of fluoroelastomeric polymer; and
curing the conformal layer to produce a coated sensor assembly.

14. The method of claim 13, further comprising repeating the steps of immersing the sensor assembly, withdrawing the sensor assembly, and permitting at least some of the organic solvent to evaporate to form a plurality of conformal layers.

15. The method of claim 13 or claim 14, further comprising the step of color coding a portion of the coated sensor assembly.
